# EUROPEAN PATENT APPLICATION

(11) **EP 4 148 665 A2**
(43) Date of publication of application: **15.03.2023**
(21) Application number: 22187772.3
(22) Date of filing: 29.07.2022
(51) Int. Cl.: G06T 7/00

(54) **AUTOMATED VOLUMETRIC IMAGE CAPTURE OF AN OBJECT TO SUPPORT GENERAL VISUAL INSPECTION**

(30) Priority: 09.09.2021 US 202117469999
(71) Applicant: The Boeing Company, Chicago, IL 60606-1596 (US)
(72) Inventor: SCOTT, Jeremiah, Chicago, 60606-1596 (US); KARPINSKI, Peter John, Chicago, 60606-1596 (US); BAKER, Robert Stephen Kanematsu, Chicago, 60606-1596 (US); SWEERS, Gregory James, Chicago, 60606-1596 (US)
(74) Representative: Howson, Richard Giles Bentham

(57) **Abstract**

Systems and methods provide technology for inspections including receiving image data from a sensor, the sensor operable to scan an object, where the object is a manufactured object, generating a 3D image record for the object based on the image data, comparing the 3D image record with a stored design model for the object and/or a stored baseline image record of the object, and generating findings data based on the comparing, where the findings data is indicative of a discrepancy identified between the 3D image record and the one or more of the stored design model for the object or the stored baseline image record of the object. The sensor can be mounted on a moving platform such as a robotic arm, a track mounted assembly or a drone. The technology can further include a motion or flight plan for moving the sensor relative to the object.

## Description

### FIELD

The disclosure relates generally to computing technology. More particularly, the disclosure relates to a system for automatically capturing images of an object to support automated inspection.

### BACKGROUND

Current processes utilize individual persons to visually inspect each job or physical location. Individuals typically focus on individual requirements and are often limited or impacted by safety concerns, thus creating inconsistent validation results. Additionally, some objects are not readily suited for manual scan or inspection, such as large objects or objects difficult to reach by individuals. Furthermore, current technologies such as drone technologies are limited in their capacity to deliver dimensional information. For example, these technologies leverage two-dimensional photographic and video recordings, which lack dimension and often lack location reference information relative to the physical space. Accordingly, there is a need for improved technology for automated and consistent imaging capture and comparisons to design specifications or baseline image recordings.

### SUMMARY

In accordance with one or more examples, an inspection system comprises a sensor, a processor, and non-transitory memory coupled to the processor, the memory comprising instructions which, when executed by the processor, cause the system to perform operations comprising receiving image data from the sensor, the sensor operable to scan an object to generate the image data, wherein the object is a manufactured object, generating a three-dimensional (3D) image record for the object based on the image data, comparing the 3D image record with one or more of a stored design model for the object or a stored baseline image record of the object, and generating findings data based on the comparing, wherein the findings data is indicative of a discrepancy identified between the 3D image record and the one or more of the stored design model for the object or the stored baseline image record of the object.

In accordance with one or more examples, an inspection method comprises receiving image data from a sensor, the sensor scanning an object to generate the image data, wherein the object is a manufactured object, generating a three-dimensional (3D) image record for the object based on the image data, comparing the 3D image record one or more of a stored design model for the object or a stored baseline image record of the object, and generating findings data based on the comparing, wherein the findings data is indicative of a discrepancy identified between the 3D image record and the one or more of the stored design model for the object or the stored baseline image record of the object. In accordance with one or more examples, a non-transitory computer-readable storage medium comprises instructions which, when executed by a processor, cause a computing system to perform operations comprising receiving image data from a sensor, the sensor scanning an object to generate the image data, wherein the object is a manufactured object, generating a three-dimensional (3D) image record for the object based on the image data, comparing the 3D image record one or more of a stored design model for the object or a stored baseline image record of the object, and generating findings data based on the comparing, wherein the findings data is indicative of a discrepancy identified between the 3D image record and the one or more of the stored design model for the object or the stored baseline image record of the object.

### BRIEF DESCRIPTION OF THE DRAWINGS

The various advantages of the examples of the present disclosure will become apparent to one skilled in the art by reading the following specification and appended claims, and by referencing the following drawings, in which:
FIGs. 1A-1D provide diagrams illustrating example image capture scenarios for an object according to one or more examples;
FIG. 2 provides a diagram illustrating an example of an automated inspection system according to one or more examples;
FIG. 3 provides a flow diagram illustrating an example of an automated inspection method according to one or more examples;
FIG. 4 provides a diagram illustrating an example of an automated inspection system according to one or more examples;
FIG 5 provides flow diagram illustrating an example of an automated inspection method according to one or more examples; and
FIG. 6 provides a diagram illustrating an example of a computing system for use in an automated inspection system according to one or more examples.

Accordingly, it is to be understood that the examples herein described are merely illustrative of the application of the principles disclosed. Reference herein to details of the illustrated examples is not intended to limit the scope of the claims, which themselves recite those features regarded as essential to the disclosure.

### DESCRIPTION

An improved system and method as described herein provides a systematic approach for validation of inspection requirements for manufactured objects including large scale objects such as an aircraft, a vehicle, or a vessel, or a component thereof. The disclosed technology improves inspection quality and safety, both during the image capture process and in identifying changes, defects, and/or anomalies in an object that present safety concerns. It provides an automated process for inspections, reducing human errors, and providing a more efficient and effective method for general and detailed visual inspections. For example, by comparing an entire (or a relatively large) surface area of an object, defects that stretch out over a large area can be identified easier such as, for example, gaps in mating surfaces.

During an image capture process using one or more sensors for scanning an object, images of the surface of the object are captured and converted to a three-dimensional (3D) image record (such as a 3D volumetric data model). The 3D image record can then be compared to a stored image record of the object, such as a baseline scan of the object that was taken during manufacture of the object or a design model for the object. Based on the comparison, any discrepancies such as defects or anomalies can be identified. This process can be used during various steps of manufacture to capture the intended surfaces that will later be used to compare for defect identification. For example, a series of 3D image records can be generated at various stages of the lifecycle of the object, such as during object manufacture, at completion and delivery of the object, during maintenance, etc.; image scans to generate 3D image records can be used to document as built assemblies and can be repeated at regular intervals for use in automated quality inspections.

The system can use one or more imaging sensors to capture imaging data such as visual data, infrared data, ultrasonic data, light detection and ranging (LIDAR) data, x-ray data, or any combination thereof. Each sensor is operable to scan the object, and can be mounted on a moving platform to accurately move and position the sensor around the object for scanning the object. The moving platform can be, e.g., a track mounted assembly or device, a robotic arm or a drone, such that the moving platform is operable to move the sensor relative to the object to scan the object. Alternatively, each sensor can be mounted on a fixed or stationary platform and the object moved relative to the sensor(s) to perform the scan of the object. Drones can use simultaneous location and mapping (SLAM) or other technologies for navigation to capture multiple viewpoints to create, e.g., volumetric three-dimensional (3D) image records for the object. The system can use fly-by-model capability for automated drone flights, providing automated volumetric capture of physical objects and their correlation to design models. Additionally, drone swarm technology can also be utilized to support larger area scans to improve efficiency and reduce total production process time.

The one or more sensors are used to capture images of the object surface (both internal and external surfaces, where appropriate), and are converted to 3D image records such as, e.g., 3D volumetric data sets. The image capture can be performed, for example, during manufacture and/or after sale or delivery (e.g., during maintenance) of the object. The 3D image records can be used for automatic comparison with design models or baseline scans, enabling the validation of the physical build of the object to the object design for use in automated large area visual inspections. The system can also use artificial intelligence (AI) or machine learning techniques to support 3D image record comparisons.

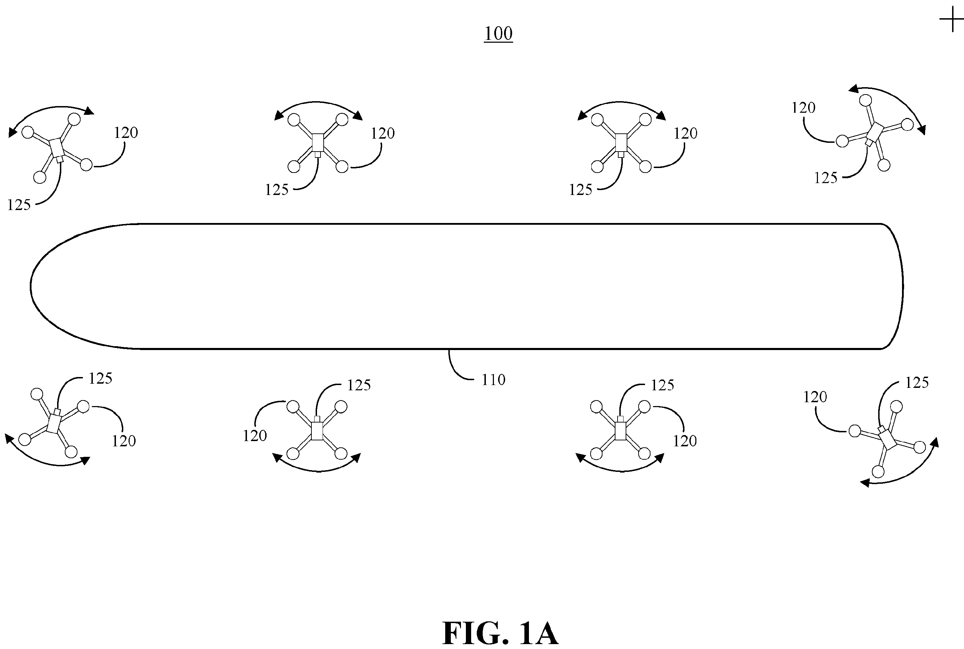

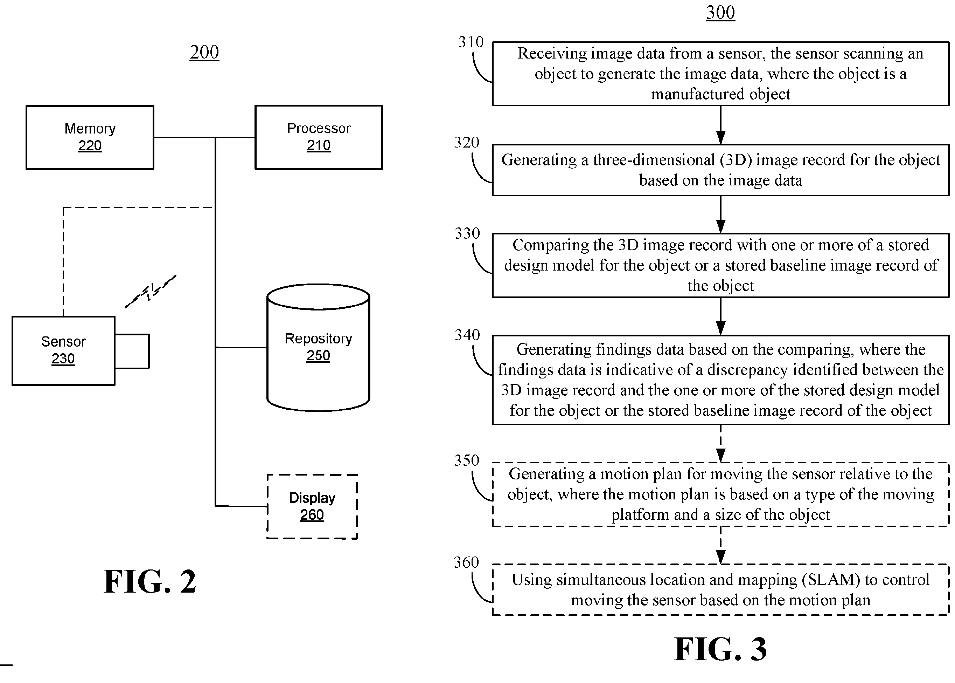

FIGs. 1A-1D provide diagrams illustrating example image capture scenarios for an object according to one or more examples, with reference to components and features described herein including but not limited to the figures and associated description. Image capture of an object can occur at any stage of manufacture (and be repeated at various stages of manufacture), upon completion or delivery of the object, and/or at various intervals or stages during the object lifecycle. For example, the image capture process can be performed within a manufacturing facility where the object is constructed or assembled. While the examples shown in FIGs. 1A-1D illustrate image capture scenarios for a large object (aircraft fuselage), the technology can be used with many other types/sizes of objects, including an aircraft, a rotorcraft, a vehicle, or a vessel, or a component thereof. The illustrated image capture scenarios are for use within or by an automated inspection system, described herein with reference to FIGs. 2-6.

Turning now to FIG. 1A, the diagram illustrates an example of an image capture scenario 100 for an object 110. The object 110 illustrates an example of an aircraft fuselage that can be, e.g. in the manufacturing process. As shown in FIG. 1A, a plurality of drones 120 are used to scan the object 110. Each drone has mounted thereon a sensor 125 which can be, e.g., a visual sensor, an infrared sensor, an ultrasonic sensor, a light detection and ranging (LIDAR) sensor, or an x-ray sensor, etc. to capture images of the object 110 (or portions of the object 110). In some examples, a mixture of sensor types can be used. Each of the drones 120 operates according to a flight plan which coordinates movement of the drones 120 around the object 110 during scanning to ensure appropriate coverage of the object 110 by the image capture process, while accounting for inspection requirements. Depending on the level of detail required for the inspection (i.e. general visual or detailed visual inspection), the sensors will be deployed to capture all surfaces of the physical subject.

The flight plan is based on the model for the object, defining the size of the object and all surfaces required to be imaged. The flight plan will be deployed such that the capture platform will be moved above, below, and on all sides of each surface of the object in order to capture images depicting each surface. The distance to subject and resolution of the capture hardware will drive the level of detail and accuracy needed for the image capture. For example, simultaneous location and mapping (SLAM) technology can provide live location reference data for use in independent validation of the sensor's location in reference to its current position and the model-based flight plan. A flight controller can also be used for automated navigation and control of the drones. For example, SLAM location reference data can be provided to the flight controller and used by the flight controller for controlling each drone.

SLAM technology also provides relational space data used for generating 3D image records (e.g., 3D volumetric data sets), including information that can be used to align or stitch together data from the plurality of sensors. Alternatively, in some examples, markers can be used in conjunction with the image capture to align and/or stitch images together. Each of the drones 120 can be configured to transmit image data from the respective sensor to a receiver (not shown in FIG. 1A) which can be part of the automated inspection system; the automated inspection system can record or store the received image data for further processing.

The number of drones 120 selected for a particular scan can be determined based on the size of the object 110, time to complete the image scan, and/or flight pattern complexity, among other factors. While a plurality of drones 120 is shown in FIG. 1A, in some scenarios only a single drone 120 is used to scan the object 110. The images captured of each surface by each capture platform can be stored on the capture device or transmitted for a preview of the scan or storage. In some examples, a transmission for a preview scan can be made at a lower resolution. The images captured will be processed via computer or server platforms using 3D modeling software. The software will isolate each image's perspective and project the captured visual record onto the relative plane. The relative plane represents the position, location, orientation and scale on the volumetric model, in relation to the other captured images adjacent to it. This plane will then be combined with other perspectives and captured images to build out the 3D image record of the subject. Each image captured from a different location of the same object, provides additional perspectives, details, and content that is added to the 3D image record, providing more and more accuracy and granularity in the final record.

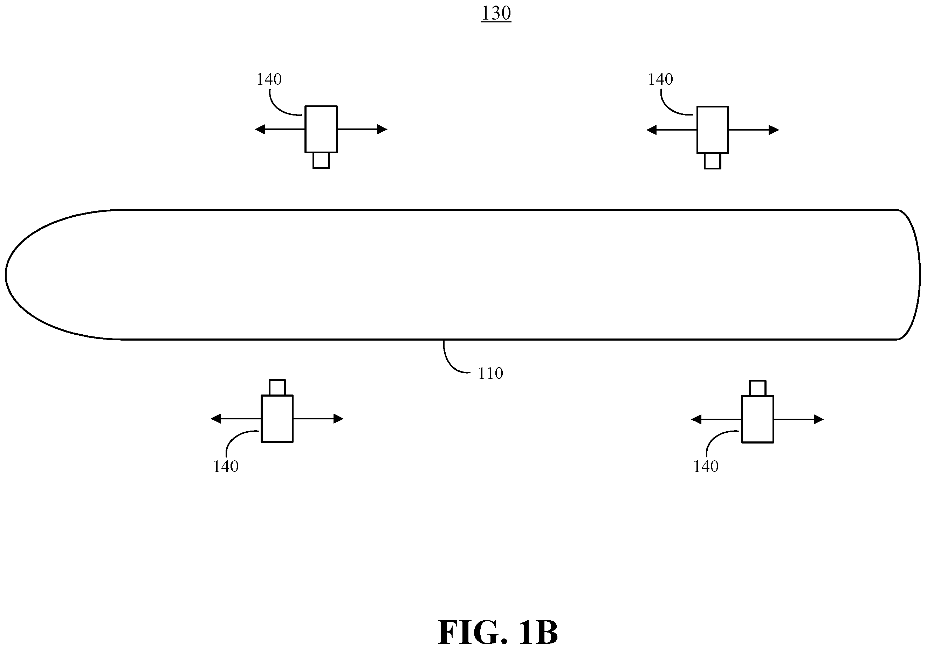

Turning now to FIG. 1B, the diagram illustrates another example of an image capture scenario 130 for the object 110. As shown in FIG. 1B, a plurality of sensors 140 are used to scan the object 110. Each sensor 140 is mounted on a moving platform, which can provide for movement of the sensor in up to six degrees of motion. Each sensor 140 can be, e.g., a visual sensor, an infrared sensor, an ultrasonic sensor, a light detection and ranging (LIDAR) sensor, or an x-ray sensor, etc. to capture images of the object 110 (or portions of the object 110). In some examples, a mixture of sensor types can be used. Each of the sensors 140 operates according to a model-based motion plan which coordinates movement of the sensors 140 around the object 110 to ensure appropriate coverage of the object 110 by the image capture process, while accounting for inspection requirements. SLAM technology can provide location reference data to be used in controlling the sensors (or moving platforms) based on the motion plan.

SLAM technology also provides relational space data used for generating 3D image records (e.g., 3D volumetric data sets), including information that can be used to align or stitch together data from the plurality of sensors. Alternatively, in some examples, markers can be used in conjunction with the image capture to align and/or stitch images together. Each of the sensors 140 can be configured to transmit image data from the respective sensor to a receiver (not shown in FIG. 1B) which can be part of the automated inspection system; in some examples, each sensor 140 can be connected via a network (wired or wireless) to the automated inspection system. The automated inspection system can record or store the received image data for further processing.

The number of sensors 140 selected for a particular scan can be determined based on the size of the object 110, time to complete the image scan, type of moving platform, motion pattern complexity, among other factors. In some examples, the moving platform includes a robotic arm or a track mounted assembly or device. In some examples, a person or persons can also manually capture supplemental images if needed. While a plurality of sensors 140 is shown in FIG. 1B, in some scenarios only a single sensor 140 is used to scan the object 110. In some examples, each sensor 140 corresponds to a sensor 125 (FIG. 1A, already discussed).

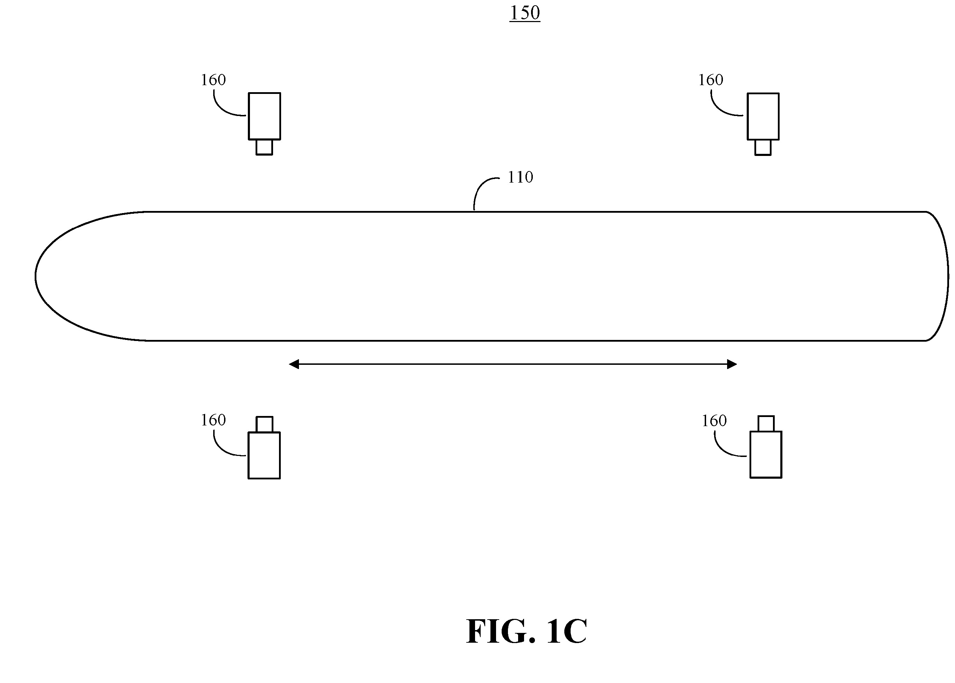

Turning now to FIG. 1C, the diagram illustrates another example of an image capture scenario 150 for the object 110. As shown in FIG. 1C, a plurality of sensors 160 are used to scan the object 110. Each sensor 160 is mounted on a fixed or stationary platform, and the object 110 is moved relative to the sensors 160 to scan the object 110. For example, the object 110 can be placed on a moving platform to move the object 110 for scanning. Each sensor 160 can be, e.g., a visual sensor, an infrared sensor, an ultrasonic sensor, a light detection and ranging (LIDAR) sensor, or an x-ray sensor, etc. to capture images of the object 110 (or portions of the object 110). In some examples, a mixture of sensor types can be used. The capture of the images will be triggered by the movement of the subject through the space. This can be accomplished by an automated system such as, e.g., a series of physical or electronic triggers which can be used to automatically capture the images based on the location of the object in the space. Each of the sensors 160 can be configured to transmit image data from the respective sensor to a receiver (not shown in FIG. 1C) which can be part of the automated inspection system; in some examples, each sensor 160 can be connected via a network (wired or wireless) to the automated inspection system. The automated inspection system can record or store the received image data for further processing.

The number of sensors 160 selected for a particular scan can be determined based on the size of the object 110, time to complete the image scan, type of moving platform, motion pattern complexity, among other factors, while accounting for inspection requirements. While a plurality of sensors 160 is shown in FIG. 1C, in some scenarios only a single sensor 160 is used to scan the object 110. In some examples, each sensor 160 corresponds to a sensor 140 (FIG. 1B, already discussed).

Turning now to FIG. ID, the diagram illustrates another example of an image capture scenario 170 for the object 110. As shown in FIG. ID, a plurality of sensors 180 are used to scan the interior surfaces of the object 110. Each sensor 180 is mounted on a moving platform such as, e.g., a drone or a track-mounted assembly or device. Each sensor 180 can be, e.g., a visual sensor, an infrared sensor, an ultrasonic sensor, a light detection and ranging (LIDAR) sensor, or an x-ray sensor, etc. to capture images of the object 110 (or portions of the object 110). In some examples, a mixture of sensor types can be used. Each of the sensors 180 operates according to a motion (or flight) plan which coordinates movement of the sensors 180 around the interior of the object 110 to ensure appropriate coverage of the interior of the object 110 by the image capture process, while accounting for inspection requirements. Each of the sensors 180 can be configured to transmit image data from the respective sensor to a receiver (not shown in FIG. ID) which can be part of the automated inspection system; in some examples, each sensor 180 can be connected via a network (wired or wireless) to the automated inspection system. The automated inspection system can record or store the received image data for further processing. While a plurality of sensors 180 is shown in FIG. ID, in some scenarios only a single sensor 180 is used to scan the object 110. The number of sensors 180 selected for a particular scan can be determined based on the size of the object 110, time to complete the image scan, type of moving platform, motion pattern complexity, among other factors. In some examples, each sensor 180 corresponds to a sensor 125 (FIG. 1A, already discussed) and/or a sensor 140 (FIG. 1B, already discussed).

FIG. 2 provides a diagram illustrating an example of an automated inspection system 200 according to one or more examples, with reference to components and features described herein including but not limited to the figures and associated description. The automated inspection system 200 includes a processor 210 and a memory 220 (which is a non-transitory memory). The processor 210 can include a central processing unit (CPU), a microprocessor, a reduced instruction set computing (RISC) processor, an application specific integrated circuit (ASIC), or any other type of suitable processing device, and is configured to execute instructions.

The processor 210 is coupled or connected to the memory 220, which is a machine- or computer-readable storage medium that stores executable instructions and/or data. The memory 220 can include random access memory (RAM), read only memory (ROM), programmable ROM (PROM), firmware, flash memory, etc. The executable instructions stored in the memory 220, when executed by the processor 210, cause the automated inspection system to perform operations for automated image capture and automated inspection of an object (such as the object 110) as described herein, including operations described with reference to method 300 (FIG. 3).

The automated inspection system 200 also includes a sensor 230. The sensor 230 can be, e.g., a visual sensor, an infrared sensor, an ultrasonic sensor, a light detection and ranging (LIDAR) sensor, or an x-ray sensor, etc. to capture images of an object (such as the object 110). While one sensor 230 is shown in FIG. 2, the automated inspection system 200 can include more than one sensor 230. The number of sensors can be selected based on the size of the object, time required to complete a scan, etc. Each sensor 230 can correspond to the sensor(s) 125 (FIG. 1A, already discussed), the sensor(s) 140 (FIG. 1B, already discussed), the sensor(s) 160 (FIG. 1C, already discussed), and/or the sensor(s) 180 (FIG. ID, already discussed). Each sensor can be mounted on a moving platform (not shown in FIG. 2) and moved relative to the object to scan all surfaces of the object (such as the object 110). For example, the moving platform can be a drone (such as the drone 120 in FIG. 1A, already discussed). As another example, the moving platform can include a track mounted assembly or device, or a robotic arm (e.g., as discussed with reference to FIG. 1B). In some examples, each sensor 230 is mounted in a fixed location (e.g., on a fixed or stationary platform), and the object (such as the object 110) is moved relative to the sensor(s) 230 to scan the object.

In some examples, the automated inspection system 200 also includes a display 260. The display 260 can be local or remote to other components of the automated inspection system 200. The display 260 can be used, e.g., to visually present (e.g., render) captured images, findings data, etc.

FIG. 3 provides a flow diagram illustrating an example of an automated inspection method 300 according to one or more examples, with reference to components and features described herein including but not limited to the figures and associated description. The method 300 can be performed by an application executing (e.g., running) on an automated inspection system such as, e.g., the automated inspection system 200 (executing via the processor 210). More particularly, the method 300 can be implemented in one or more modules as a set of program or logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof.

The method 300 includes illustrated processing block 310, which provides for receiving image data from a sensor, the sensor scanning an object to generate the image data, where the object is a manufactured object. The manufactured object can be scanned at any stage of manufacturing (i.e., the manufacturing need not be completed) or any time thereafter. The sensor can correspond to the sensor 230 (FIG. 2, already discussed). Scanning the object (such as, e.g., an object such as object 110) can be performed based on the type and number of sensors, moving or stationary platform(s), etc., including as described with reference to FIGs. 1A-1D. The image data can include one or more of visual data, infrared data, ultrasonic data, light detection and ranging (LIDAR) data, or x-ray data. In some examples, image data from different sensor types can provide correlated data sets. For example, visual sensors can be used to capture visual image data for a surface (or surfaces) of an object, and infrared (IR) sensors can be used to capture IR image data covering the same object surface(s). In some examples, the object comprises one of an aircraft, a rotorcraft, a vehicle, or a vessel, or a component thereof.

Illustrated processing block 320 provides for generating a three-dimensional (3D) image record for the obj ect based on the image data. In some examples, generating the 3D image record for the object includes generating a 3D volumetric data set for the object. The 3D volumetric data can include, e.g., pointcloud data and/or mesh data. An example of a software package for converting images to 3D volumetric data is Agisoft Photoscan. The 3D volumetric model, comprised for example of photographic images, can include multiple capture methods. While an initial large area capture can be done using a drone platform, an additional image set can also be included in the same model in order to provide additional images and views of areas that were not accessible via the drone. A person can manually capture images of missing locations or viewpoints in order to complete the image capture for generating a final 3D volumetric model. The 3D image record can include, or be accompanied by, relational space data from the image capturing process; for example, SLAM technology can provide relational space data for each sensor during the image capturing process. For example, if visual image data and IR image data are captured for object surface(s), the visual image data and the IR image data can be correlated based on the relational space data obtained during the capture process. Illustrated processing block 330 provides for comparing the 3D image record with one or more of a stored design model for the object or a stored baseline image record of the object. A stored design model for the object can include a model or data set for the object provided by a design and manufacturing program, such as, e.g., a computer-aided design/computer-aided manufacturing (CAD/CAM) system, etc. One example of design platform for manufactured products is computer-aided three-dimensional interactive application (CATIA). As another example, a manufacturing product data management platform is Enovia. A stored baseline image record for the object can include one or more 3D image records (such as a 3D volumetric data set) produced by scanning the object during manufacture of the object, upon object completion, or at another stage of the object lifecycle. Any suitable 3D or volumetric model that has accurate surfaces can be used in the comparing. In some examples, the comparing includes comparing visual image data and/or IR image data captured for the object with the stored design model or the stored baseline image record of the object.

Illustrated processing block 340 provides for generating findings data based on the comparing, where the findings data is indicative of a discrepancy identified between the 3D image record and the one or more of the stored design model for the object or the stored baseline image record of the object. Discrepancies are those differences which exceed a threshold, which can include (or be based on) various tolerances selected, e.g., for the particular type of object, the particular application or use for the object, design criteria, institutional or expert knowledge, etc. For example, findings data can be generated based on discrepancies identified between the 3D image record (based on, e.g., captured visual image data) and the stored design model for the object or the stored baseline image record of the object, and the findings data can include such items as the amount of discrepancy, the nature of the discrepancy, and/or the location of the discrepancy. Additionally, findings data based on discrepancies identified for a 3D image record (based on non-visual data, e.g. IR image data) can be included. Findings data can be stored (for example, in a repository such as repository 250, discussed herein) and used to provide an object history and/or for later analysis. Findings data can be presented visually on a display such as, e.g., display 260 (FIG. 2, already discussed). Findings data can also be provided to a manufacturer, a supplier, a customer, a government agency, etc. or any party that needs to have the inspection information. Findings data can be used to make repairs, adjustments to manufacturing, design alterations, etc.

In some examples, method 300 includes illustrated processing block 350, which provides for generating a motion plan for moving the sensor relative to the object, where the motion plan is based on a type of the moving platform and a size of the object. The motion plan (in the case of a flying platform such as a drone, the motion plan includes a flight plan) will utilize a model-based motion or flight plan, defining the size of the object and all surfaces required to be imaged and taking into consideration object complexity. In some examples, where more than one sensor is used to scan the object, the motion or flight plan is further based on the number of sensors. In some examples, method 300 includes illustrated processing block 360, which provides for using simultaneous location and mapping (SLAM) to control moving the sensor based on the motion plan. SLAM will be utilized in examples of a drone platform. SLAM provides for a situational awareness relative to the overall flight plan. Utilizing a mix of visual information, reference Global Positioning System (GPS) or local positioning reference locations, SLAM will be utilized to validate the position. Processing block 350 and/or processing block 360 can be performed before processing block 310, or between processing block 310 and processing block 320, etc.

Returning to FIG. 2, in some examples the automated inspection system 200 also includes a repository 250. The repository 250 includes memory suitable for data storage. The repository 250 can include database technology for data storage and retrieval. The repository 250 is operable to store a plurality of three-dimensional (3D) image records for the object (such as, e.g., the object 110), where each of the plurality of 3D image records is generated based on capturing image data during a separate scan (e.g., scans performed at different times). Other information for the 3D image record (such as, e.g., date, type of sensor, object identifier, stage, etc.) can be stored along with the 3D image record and used to track the object during manufacturing or object lifecycle. The repository 250 is also operable to store a plurality of sets of findings data, each set of findings data corresponding to one or more of the plurality of 3D image records for the object. The findings data can indicate any discrepancies identified between the 3D image record and the stored design model for the object or the stored baseline image record of the object used for the comparison. Accordingly, the 3D image records for an object can provide a history for the object, including changes over time, etc., and be used to identify and quantify changes, defects, and/or anomalies.

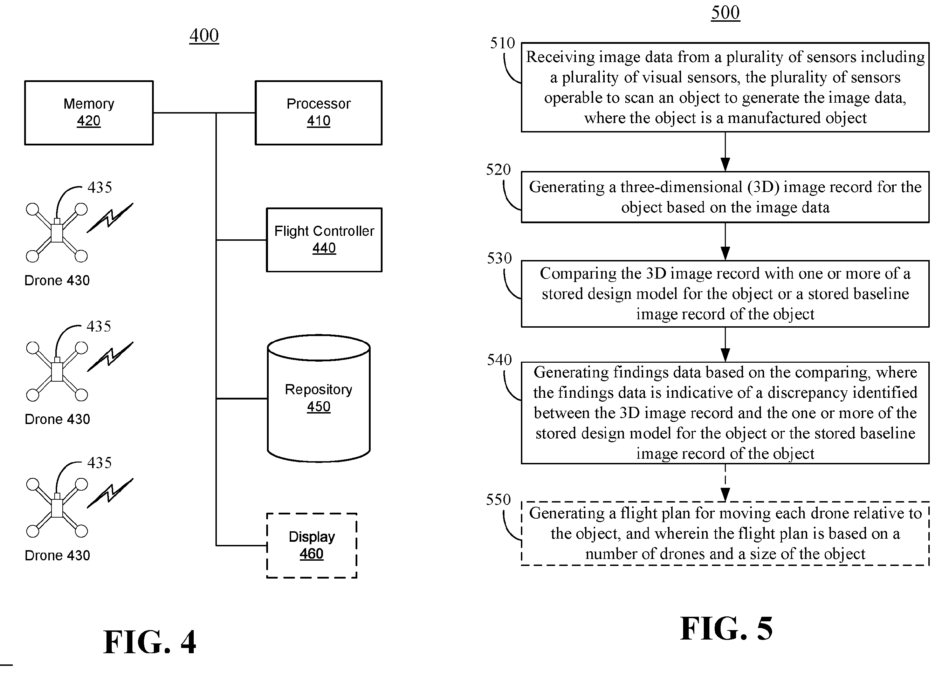

FIG. 4 provides a diagram illustrating an example of an automated inspection system 400 according to one or more examples, with reference to components and features described herein including but not limited to the figures and associated description. The automated inspection system 400 includes a processor 410 and a memory 420 (which is a non-transitory memory). The processor 410 can include a central processing unit (CPU), a microprocessor, a RISC processor, an application specific integrated circuit (ASIC), or any other type of suitable processing device, and is configured to execute instructions. In examples, the processor 410 corresponds to the processor 210 (FIG. 2, already discussed). The processor 410 is coupled or connected to the memory 420, which is a machine- or computer-readable storage medium that stores executable instructions and/or data. The memory 420 can include random access memory (RAM), read only memory (ROM), programmable ROM (PROM), firmware, flash memory, etc. In examples, the memory 420 corresponds to the memory 220 (FIG. 2, already discussed). The executable instructions stored in the memory 420, when executed by the processor 410, cause the automated inspection system to perform operations for automated image capture and automated inspection of an object (such as the object 110) as described herein, including operations described with reference to method 500 (FIG. 5).

The automated inspection system 400 also includes a plurality of drones 430, each drone 430 having mounted thereon a sensor 435. Each sensor 435 can be a visual sensor to capture images of an object (such as the object 110). In some examples, some drones 430 can have a sensor 435 that is a non-visual sensor, such as, e.g., an infrared sensor, an ultrasonic sensor, a light detection and ranging (LIDAR) sensor, or an x-ray sensor, etc. The number of drones/sensors can be selected based on the size of the object, time required to complete a scan, etc. Each drone 430 can correspond to a drone 120 (FIG. 1A, already discussed). Each sensor 435 can correspond to the sensor(s) 125 (FIG. 1A, already discussed), the sensor(s) 140 (FIG. 1B, already discussed), and/or the sensor(s) 230 (FIG. 2, already discussed). Each of the drones 430 operates according to a flight plan which coordinates movement of the drones 430 around the object (such as the object 110) during scanning to ensure appropriate coverage of the object by the image capture process. The flight plan will utilize a model-based flight plan, defining the size of the object and all surfaces required to be imaged. For example, SLAM techniques can provide live location reference data for use in controlling the drones 430 based on the flight plan. Additionally, drone swarm technology can also be utilized to support larger area scans to improve efficiency and reduce total production process time.

In examples, the automated inspection system 400 also includes a flight controller 440 for automated navigation and control of the drones 430. For example, the flight controller 440 is operable to control the movement of the drones 430 for scanning the object based on the flight plan. The flight controller can be a traditional manual remote control system, or a software module, providing network control of multiple units. The flight controller 440 can also use SLAM location reference data for controlling each drone 430.

In some examples, the automated inspection system 400 also includes a display 460. The display 460 can be local or remote to other components of the automated inspection system 400. The display 460 can be used, e.g., to visually present (e.g., render) captured images, findings data, etc.

FIG. 5 provides a flow diagram illustrating an example of an automated inspection method 500 according to one or more examples, with reference to components and features described herein including but not limited to the figures and associated description. The method 500 can be performed by an application executing (e.g., running) on an automated inspection system such as, e.g., the automated inspection system 400. More particularly, the method 500 can be implemented in one or more modules as a set of program or logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof.

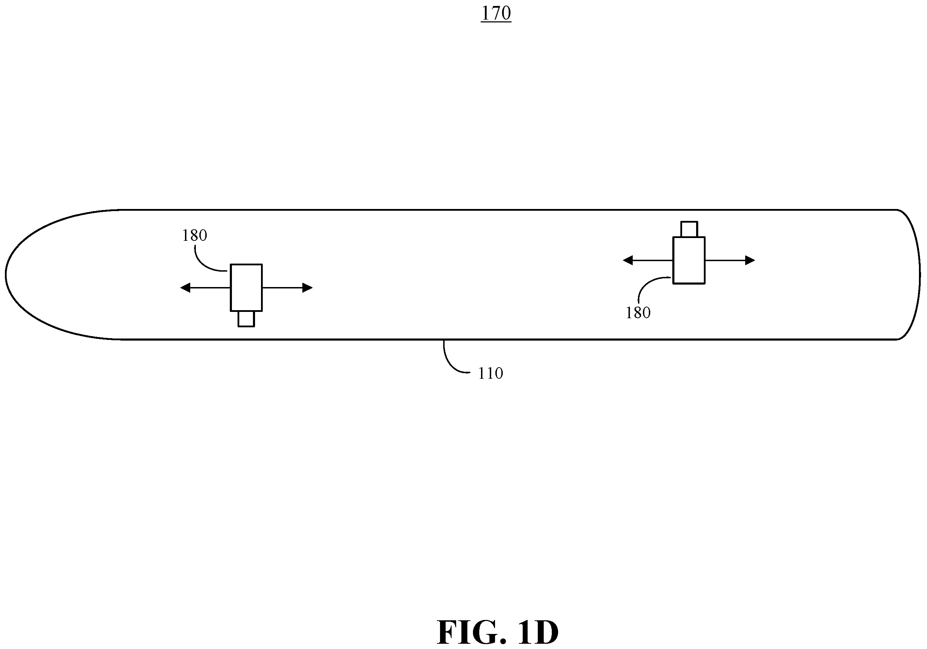

The method 500 includes illustrated processing block 510, which provides for receiving image data from a plurality of sensors including a plurality of visual sensors, the plurality of sensors operable to scan an object to generate the image data, where the object is a manufactured object. The manufactured object can be scanned at any stage of manufacturing (i.e., the manufacturing need not be completed) or any time thereafter. Each of the sensors can correspond to the sensor(s) 230 (FIG. 2, already discussed) and/or the sensor(s) 435 (FIG. 4, already discussed). Scanning the object (such as, e.g., an object such as object 110) can be performed based on the type and number of sensors, type of platform(s), etc., including as described with reference to FIGs. 1A-1B and 1D. The image data comprises visual data. In some examples, a non- visual sensor is also employed in the scanning, where the image data includes visual data and one or more of infrared data, ultrasonic data, light detection and ranging (LIDAR) data, or x-ray data. In some examples, image data from different sensor types can provide correlated data sets. For example, the visual sensors can be used to capture visual image data for a surface (or surfaces) of an object, and infrared (IR) sensors can be used to capture IR image data covering the same object surface(s). In some examples, the object comprises one of an aircraft, a rotorcraft, a vehicle, or a vessel, or a component thereof.

Illustrated processing block 520 provides for generating a three-dimensional (3D) image record for the obj ect based on the image data. In some examples, generating the 3D image record for the object includes generating a 3D volumetric data set for the object. The 3D volumetric data can include, e.g., pointcloud data and/or mesh data. The 3D image record can include, or be accompanied by, relational space data from the image capturing process; for example, SLAM technology can provide relational space data for each sensor during the image capturing process. For example, if visual image data and IR image data are captured for object surface(s), the visual image data and the IR image data can be correlated based on the relational space data obtained during the capture process. Illustrated processing block 530 provides for comparing the 3D image record with one or more of a stored design model for the object or a stored baseline image record of the object. A stored design model for the object can include a model or data set for the object provided by a design and manufacturing program, such as, e.g., a CAD/CAM system, etc. A stored baseline image record for the object can include one or more 3D image records (such as a 3D volumetric data set) produced by scanning the object during manufacture of the object, upon object completion, or at another stage of the object lifecycle. Any suitable 3D or volumetric model that has accurate surfaces can be used in the comparing. In some examples, the comparing includes comparing visual image data and/or IR image data captured for the object with the stored design model or the stored baseline image record of the object.

Illustrated processing block 540 provides for generating findings data based on the comparing, where the findings data is indicative of a discrepancy identified between the 3D image record and the one or more of the stored design model for the object or the stored baseline image record of the object. Discrepancies are those differences which exceed a threshold, which can include (or be based on) various tolerances selected, e.g., for the particular type of object, the particular application or use for the object, design criteria, institutional or expert knowledge, etc. For example, findings data can be generated based on discrepancies identified between the 3D image record (based on captured visual image data) and the stored design model for the object or the stored baseline image record of the object, and the findings data can include such items as the amount of discrepancy, the nature of the discrepancy, and/or the location of the discrepancy. Additionally, findings data based on discrepancies identified for a 3D image record (based on non-visual data, e.g. IR image data) can be included. Findings data can be stored (for example, in a repository such as repository 450, discussed herein) and used to provide an object history and/or for later analysis. Findings data can be visually presented on a display such as, e.g., display 460 (FIG. 4, already discussed). Findings data can also be provided to a manufacturer, a supplier, a customer, a government agency, etc. or any party that needs to have the inspection information. Findings data can be used to make repairs, adjustments to manufacturing, design alterations, etc.

In some examples, method 500 includes illustrated processing block 550, which provides for generating a flight plan for moving each drone relative to the object, where the flight plan is based on a number of drones and a size of the object. The flight plan will utilize a model-based flight plan, defining the size of the object and all surfaces required to be scanned and taking into consideration object complexity. In some examples, simultaneous location and mapping (SLAM) is used to control moving the drone based on the flight plan. In some examples, a flight controller (such as, e.g., flight controller 440 in FIG. 4), is used to control the movement of the drones for scanning the object based on the flight plan. In some examples, the flight controller is operable to use simultaneous location and mapping to control the movement of the drones based on the flight plan. Processing block 550 can be performed before processing block 510, or between processing block 510 and processing block 520, etc.

Returning to FIG. 4, in some examples the automated inspection system 400 also includes a repository 450. The repository 450 includes memory suitable for data storage. The repository 450 can include database technology for data storage and retrieval. The repository 450 is operable to store a plurality of three-dimensional (3D) image records for the object (such as, e.g., the object 110), where each of the plurality of 3D image records is generated based on capturing image data during a separate scan (e.g., scans performed at different times). Other information for the 3D image record (such as, e.g., date, type of sensor, object identifier, stage, etc.) can be stored along with the 3D image record and used to track the object during manufacturing or object lifecycle. The repository 450 is also operable to store a plurality of sets of findings data, each set of findings data corresponding to one or more of the plurality of 3D image records for the object. The findings data can indicate any discrepancies identified between the 3D image record and the stored design model for the object or the stored baseline image record of the object used for the comparison. Accordingly, the 3D image records for an object can provide a history for the object, including changes over time, etc., and be used to identify and quantify changes, defects, and/or anomalies. In examples, the repository 450 corresponds to the repository 250 (FIG. 2, already discussed).

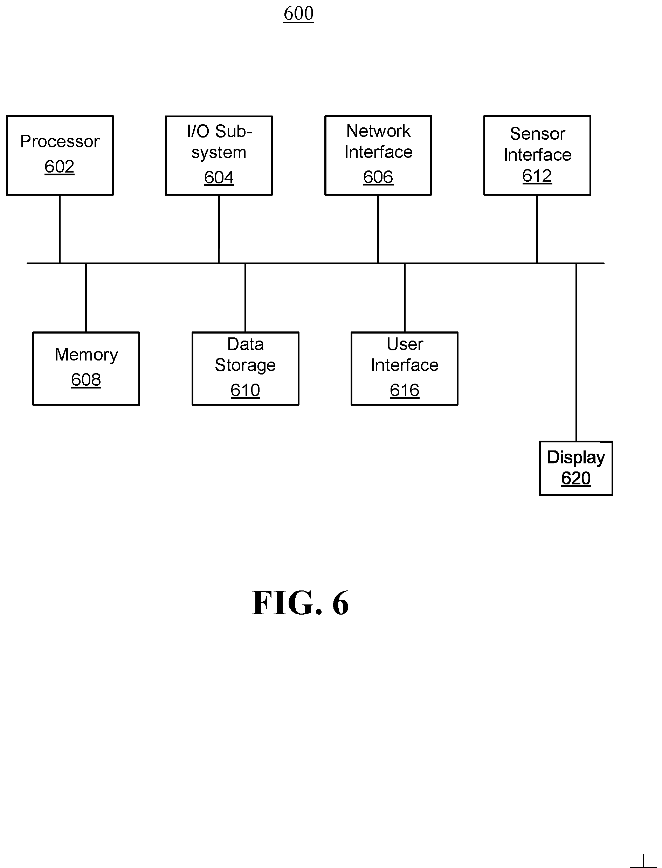

FIG. 6 is a diagram illustrating an example of a computing system 600 for use in an automated inspection system according to one or more examples, with reference to components and features described herein including but not limited to the figures and associated description. Although FIG. 6 illustrates certain components, the computing system 600 can include additional or multiple components connected in various ways. It is understood that not all examples will necessarily include every component shown in FIG. 6. As illustrated in FIG. 6, the computing system 600 includes one or more processors 602, an input/output (I/O) subsystem 604, a network interface 606, a memory 608, a data storage 610, a sensor interface 612, a user interface 616, and/or a display 620. In some examples, the computing system 600 interfaces with a separate display. The computing system 600 can implement one or more components or features of the automated inspection system 200, the automated inspection system 400, and/or any of the components or methods described herein with reference to FIGs. 1A-1D, 2, 3, 4, and/or 5.

The processor 602 can include one or more processing devices such as a microprocessor, a central processing unit (CPU), a fixed application-specific integrated circuit (ASIC) processor, a reduced instruction set computing (RISC) processor, a complex instruction set computing (CISC) processor, a field-programmable gate array (FPGA), etc., along with associated circuitry, logic, and/or interfaces. The processor 602 can include, or be connected to, a memory (such as, e.g., the memory 608) storing executable instructions and/or data, as necessary or appropriate. The processor 602 can execute such instructions to implement, control, operate or interface with any components or features of the automated inspection system 200, the automated inspection system 400, and/or any of the components or methods described herein with reference to FIGs. 1A-1D, 2, 3, 4, and/or 5. The processor 602 can communicate, send, or receive messages, requests, notifications, data, etc. to/from other devices. The processor 602 can be embodied as any type of processor capable of performing the functions described herein. For example, the processor 602 can be embodied as a single or multi-core processor(s), a digital signal processor, a microcontroller, or other processor or processing/controlling circuit. The processor 602 can correspond to the processor 210 (FIG. 2) and/or the processor 410 (FIG. 4).

The I/O subsystem 604 includes circuitry and/or components suitable to facilitate input/output operations with the processor 602, the memory 608, and other components of the computing system 600.

The network interface 606 includes suitable logic, circuitry, and/or interfaces that transmits and receives data over one or more communication networks using one or more communication network protocols. The network interface 606 can operate under the control of the processor 602, and can transmit/receive various requests and messages to/from one or more other devices. The network interface 606 can include wired or wireless data communication capability; these capabilities support data communication with a wired or wireless communication network. The network interface 606 can support communication via a short-range wireless communication field, such as Bluetooth, near-field communication (NFC), or Radio Frequency Identification (RFID). Examples of network interface 606 include, but are not limited to, one or more of an antenna, a radio frequency transceiver, a wireless transceiver, a Bluetooth transceiver, an ethernet port, a universal serial bus (USB) port, or any other device configured to transmit and receive data.

The memory 608 includes suitable logic, circuitry, and/or interfaces to store executable instructions and/or data, as necessary or appropriate, when executed, to implement, control, operate or interface with any components or features of the automated inspection system 200, the automated inspection system 400, and/or any of the components or methods described herein with reference to FIGs. 1A-1D, 2, 3, 4, and/or 5. The memory 608 can be embodied as any type of volatile or non-volatile memory or data storage capable of performing the functions described herein, and can include a random-access memory (RAM), a read-only memory (ROM), write-once read-multiple memory (such as, e.g., electrically erasable programmable read only memory (EEPROM)), a removable storage drive, a hard disk drive (HDD), a flash memory, a solid-state memory, and the like, and including any combination thereof. In operation, the memory 608 can store various data and software used during operation of the computing system 600 such as operating systems, applications, programs, libraries, and drivers. Thus, the memory 608 can include at least one non-transitory computer readable medium comprising instructions which, when executed by the computing system 600, cause the computing system 600 to perform operations to carry out one or more functions or features of the automated inspection system 200, the automated inspection system 400, and/or any of the components or methods described herein with reference to FIGs. 1A-1D, 2, 3, 4, and/or 5. The memory 608 can be communicatively coupled to the processor 602 directly or via the I/O subsystem 604. The memory 608 can correspond to the memory 220 (FIG. 2) and/or the memory 420 (FIG. 4).

The data storage 610 can include any type of device or devices configured for short-term or long-term storage of data such as, for example, memory devices and circuits, memory cards, hard disk drives, solid-state drives, non-volatile flash memory, or other data storage devices. The data storage 610 can include or be configured as a database, such as a relational or non-relational database, or a combination of more than one database. In some examples, a database or other data storage can be physically separate and/or remote from the computing system 600, and/or can be located in another computing device, a database server, on a cloud-based platform, or in any storage device that is in data communication with the computing system 600. In examples, the data storage 610 can correspond to or implement all or portions of the repository 250 (FIG. 2) and/or the repository 450 (FIG. 4).

The sensor interface 612 includes circuitry and/or components suitable to facilitate communications and/or exchange of data, commands or signals between the computing system 600 and one or more sensors, which can include one or more of the sensor(s) 125 (FIG. 1A), the sensor(s) 140 (FIG. 1B), the sensor(s) 160 (FIG. 1C), the sensor(s) 180 (FIG. ID), the sensor(s) 230 (FIG. 2), and/or the sensor(s) 435 (FIG. 4).

In some examples, the computing system 600 includes an artificial intelligence (AI) accelerator (not shown in FIG. 6). The AI accelerator includes suitable logic, circuitry, and/or interfaces to accelerate artificial intelligence applications, such as, e.g., artificial neural networks, machine vision and machine learning applications, including through parallel processing techniques. In one or more examples, the AI accelerator can include a graphics processing unit (GPU).

The user interface 616 includes code to present, on a display, information or screens for a user and to receive input (including commands) from a user via an input device. The display 620 can be any type of device for presenting visual information, such as a computer monitor, a flat panel display, or a mobile device screen, and can include a liquid crystal display (LCD), a light-emitting diode (LED) display, a plasma panel, or a cathode ray tube display, etc. The display 620 can include a display interface for communicating with the display. In some examples, the display 620 can include a display interface for communicating with a display external to the computing system 600. The display 620 can correspond to the display 260 (FIG. 2, already discussed) and/or to the display 460 (FIG. 4, already discussed).

In some examples, one or more of the illustrative components of the computing system 600 can be incorporated (in whole or in part) within, or otherwise form a portion of, another component. For example, the memory 608, or portions thereof, can be incorporated within the processor 602. As another example, the user interface 616 can be incorporated within the processor 602 and/or code in the memory 608. In some examples, the computing system 600 can be embodied as, without limitation, a mobile computing device, a smartphone, a wearable computing device, an Internet-of-Things device, a laptop computer, a tablet computer, a notebook computer, a computer, a workstation, a server, a multiprocessor system, and/or a consumer electronic device. In some examples, the computing system 600, or portion thereof, is implemented in one or more modules as a set of logic instructions stored in at least one non-transitory machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof. Examples of each of the above systems, devices, components and/or methods, including the automated inspection system 200, the method 300, the automated inspection system 400, the method 500, the computing system 600, and/or portions thereof, and/or any other system components, can be implemented in hardware, software, or any suitable combination thereof. For example, hardware implementations can include configurable logic such as, for example, programmable logic arrays (PLAs), field programmable gate arrays (FPGAs), complex programmable logic devices (CPLDs), or fixed-functionality logic hardware using circuit technology such as, for example, application specific integrated circuit (ASIC), complementary metal oxide semiconductor (CMOS) or transistor-transistor logic (TTL) technology, or any combination thereof.

Alternatively, or additionally, all or portions of the foregoing systems and/or components and/or methods can be implemented in one or more modules as a set of program or logic instructions stored in a machine- or computer-readable storage medium such as RAM, ROM, PROM, firmware, flash memory, etc., to be executed by a processor or computing device. For example, computer program code to carry out the operations of the components can be written in any combination of one or more operating system (OS) applicable/appropriate programming languages, including an object-oriented programming language such as PYTHON, PERL, JAVA, SMALLTALK, C++, C# or the like and conventional procedural programming languages, such as the "C" programming language or similar programming languages.

### Additional Notes and Examples:

Further, the disclosure comprises additional examples as detailed in the following clauses. Clause 1 includes an inspection system comprising a sensor, a processor, and non-transitory memory coupled to the processor, the memory comprising instructions which, when executed by the processor, cause the system to perform operations comprising receiving image data from the sensor, the sensor operable to scan an object to generate the image data, wherein the object is a manufactured object, generating a three-dimensional (3D) image record for the object based on the image data, comparing the 3D image record with one or more of a stored design model for the object or a stored baseline image record of the object, and generating findings data based on the comparing, wherein the findings data is indicative of a discrepancy identified between the 3D image record and the one or more of the stored design model for the object or the stored baseline image record of the object.

Clause 2 includes the inspection system of Clause 1, wherein the sensor is mounted on a moving platform, the moving platform operable to move the sensor relative to the object to scan the object.

Clause 3 includes the inspection system of Clause 1 or 2, wherein the instructions, when executed, cause the system to perform further operations comprising generating a motion plan for moving the sensor relative to the object, wherein the motion plan is based on a type of the moving platform and a size of the object.

Clause 4 includes the inspection system of Clause 1, 2 or 3, wherein the moving platform comprises one of a robotic arm, a track mounted assembly or a drone.

Clause 5 includes the inspection system of any of Clauses 1-4, wherein the instructions, when executed, cause the system to perform further operations comprising using simultaneous location and mapping to control the moving platform based on the motion plan.

Clause 6 includes the inspection system of any of Clauses 1-5, wherein the sensor is mounted in a fixed location and the object is moved relative to the sensor to scan the obj ect.

Clause 7 includes the inspection system of any of Clauses 1-6, wherein the image data comprises one or more of visual data, infrared data, ultrasonic data, light detection and ranging (LIDAR) data, or x-ray data.

Clause 8 includes the inspection system of any of Clauses 1-7, wherein generating the 3D image record for the object comprises generating a 3D volumetric data set for the object. Clause 9 includes the inspection system of any of Clauses 1-8, wherein the 3D image record for the object includes relational space data.

Clause 10 includes the inspection system of any of Clauses 1-9, wherein the object comprises one of an aircraft, a rotorcraft, a vehicle, or a vessel, or a component thereof. Clause 11 includes the inspection system of any of Clauses 1-10, further comprising a repository including memory, the repository operable to store a plurality of 3D image records for the object, each of the plurality of 3D image records generated based on receiving image data during a separate scan.

Clause 12 includes the inspection system of any of Clauses 1-11, wherein the repository is further operable to store a plurality of sets of findings data, each set of findings data corresponding to one or more of the plurality of 3D image records for the object.

Clause 13 includes an inspection method comprising receiving image data from a sensor, the sensor scanning an object to generate the image data, wherein the object is a manufactured object, generating a three-dimensional (3D) image record for the object based on the image data, comparing the 3D image record one or more of a stored design model for the object or a stored baseline image record of the object, and generating findings data based on the comparing, wherein the findings data is indicative of a discrepancy identified between the 3D image record and the one or more of the stored design model for the object or the stored baseline image record of the object.

Clause 14 includes the inspection method of Clause 13, wherein the sensor is mounted on a moving platform and moved relative to the object to scan the object.

Clause 15 includes the inspection method of Clause 13 or 14, further comprising generating a motion plan for moving the sensor relative to the object, wherein the motion plan is based on a type of the moving platform and a size of the object.

Clause 16 includes the inspection method of Clause 13, 14 or 15, wherein the moving platform comprises one of a robotic arm, a track mounted assembly or a drone.

Clause 17 includes the inspection method of any of Clauses 13-16, further comprising using simultaneous location and mapping (SLAM) to control moving the sensor based on the motion plan.

Clause 18 includes the inspection method of any of Clauses 13-17, wherein the sensor is mounted in a fixed location and the object is moved relative to the sensor to scan the obj ect.

Clause 19 includes the inspection method of any of Clauses 13-18, wherein the image data comprises one or more of visual data, infrared data, ultrasonic data, light detection and ranging (LIDAR) data, or x-ray data.

Clause 20 includes the inspection method of any of Clauses 13-19, wherein generating the 3D image record for the object comprises generating a 3D volumetric data set for the obj ect.

Clause 21 includes the inspection method of any of Clauses 13-20, wherein the 3D image record for the object includes relational space data.

Clause 22 includes the inspection method of any of Clauses 13-21, wherein the object comprises one of an aircraft, a rotorcraft, a vehicle, or a vessel, or a component thereof. Clause 23 includes the inspection method of any of Clauses 13-22, further comprising maintaining a repository of a plurality of 3D image records for the object, each of the plurality of 3D image records generated based on receiving image data during a separate scan.

Clause 24 includes the inspection method of any of Clauses 13-23, further comprising maintaining, in the repository, a plurality of sets of findings data, each set of findings data corresponding to one or more of the plurality of 3D image records for the object. Clause 25 includes an inspection system comprising a plurality of sensors including a plurality of visual sensors, a processor, and non-transitory memory coupled to the processor, the memory comprising instructions which, when executed by the processor, cause the system to perform operations comprising receiving image data from the plurality of sensors, the sensors operable to scan an object to generate the image data, wherein the object is a manufactured object, generating a three-dimensional (3D) image record for the object based on the image data, comparing the 3D image record with one or more of a stored design model for the object or a stored baseline image record of the object, and generating findings data based on the comparing, wherein the findings data is indicative of a discrepancy identified between the 3D image record and the one or more of the stored design model for the object or the stored baseline image record of the object.

Clause 26 includes the inspection system of Clause 25, wherein each sensor of the plurality of sensors is mounted on a separate moving platform, and wherein each separate moving platform is operable to move the respective sensor relative to the object to scan the object.

Clause 27 includes the inspection system of Clause 25 or 26, wherein each moving platform comprises a drone, wherein the instructions, when executed, cause the system to perform further operations comprising generating a flight plan for moving each drone relative to the object, and wherein the flight plan is based on a number of drones and a size of the object.

Clause 28 includes the inspection system of Clause 25, 26 or 27, further comprising a flight controller operable to control a movement of each drone to scan the object based on the flight plan.

Clause 29 includes the inspection system of any of Clauses 25-28, wherein the flight controller is operable to use simultaneous location and mapping to control the movement of each drone based on the flight plan.

Clause 30 includes the inspection system of any of Clauses 25-29, wherein generating the 3D image record for the object comprises generating a 3D volumetric data set for the obj ect.

Clause 31 includes the inspection system of any of Clauses 25-30, wherein the plurality of sensors includes a non- visual sensor, and wherein the image data comprises visual data and one or more of infrared data, ultrasonic data, light detection and ranging (LIDAR) data, or x-ray data.

Clause 32 includes the inspection system of any of Clauses 25-31, wherein the object comprises one of an aircraft, a rotorcraft, a vehicle, or a vessel, or a component thereof. Clause 33 includes the inspection system of any of Clauses 25-32, further comprising a repository including memory, the repository operable to store a plurality of 3D image records for the object, each of the plurality of 3D image records generated based on receiving image data during a separate scan, and a plurality of sets of findings data, each set of findings data corresponding to one or more of the plurality of 3D image records for the object.

Clause 34 includes a non-transitory computer-readable storage medium comprising instructions which, when executed by a processor, cause a computing system to perform operations comprising receiving image data from a sensor, the sensor scanning an object to generate the image data, wherein the object is a manufactured object, generating a three-dimensional (3D) image record for the object based on the image data, comparing the 3D image record one or more of a stored design model for the object or a stored baseline image record of the object, and generating findings data based on the comparing, wherein the findings data is indicative of a discrepancy identified between the 3D image record and the one or more of the stored design model for the object or the stored baseline image record of the object.

Clause 35 includes the non-transitory computer-readable storage medium of Clause 34, wherein the sensor is mounted on a moving platform and moved relative to the object to scan the object.

Clause 36 includes the non-transitory computer-readable storage medium of Clause 34 or 35, wherein the instructions, when executed, cause the computing system to perform further operations comprising generating a motion plan for moving the sensor relative to the object, wherein the motion plan is based on a type of the moving platform and a size of the object.

Clause 37 includes the non-transitory computer-readable storage medium of Clause 34, 35 or 36, wherein the moving platform comprises one of a robotic arm, a track mounted assembly or a drone.

Clause 38 includes the non-transitory computer-readable storage medium of any of Clauses 34-37, wherein the instructions, when executed, cause the computing system to perform further operations comprising using simultaneous location and mapping (SLAM) to control moving the sensor based on the motion plan.

Clause 39 includes the non-transitory computer-readable storage medium of any of Clauses 34-38, wherein the sensor is mounted in a fixed location and the object is moved relative to the sensor to scan the object.

Clause 40 includes the non-transitory computer-readable storage medium of any of Clauses 34-39, wherein the image data comprises one or more of visual data, infrared data, ultrasonic data, light detection and ranging (LIDAR) data, or x-ray data.

Clause 41 includes the non-transitory computer-readable storage medium of any of Clauses 34-40, wherein generating the 3D image record for the object comprises generating a 3D volumetric data set for the object.

Clause 42 includes the non-transitory computer-readable storage medium of any of Clauses 34-41, wherein the 3D image record for the object includes relational space data. Clause 43 includes the non-transitory computer-readable storage medium of any of Clauses 34-42, wherein the object comprises one of an aircraft, a rotorcraft, a vehicle, or a vessel, or a component thereof.

Clause 44 includes the non-transitory computer-readable storage medium of any of Clauses 34-43, wherein the instructions, when executed, cause the computing system to perform further operations comprising maintaining a repository of a plurality of 3D image records for the object, each of the plurality of 3D image records generated based on receiving image data during a separate scan.

Clause 45 includes the non-transitory computer-readable storage medium of any of Clauses 34-44, wherein the instructions, when executed, cause the computing system to perform further operations comprising maintaining, in the repository, a plurality of sets of findings data, each set of findings data corresponding to one or more of the plurality of 3D image records for the object.

Clause 46 includes the inspection system of any of Clauses 1-12, further comprising a display to visually present the findings data.

Clause 47 includes the inspection method of any of Clauses 13-24, further comprising visually presenting the findings data via a display.

Clause 48 includes the inspection system of any of Clauses 25-33, further comprising a display to visually present the findings data.

Clause 49 includes the non-transitory computer-readable storage medium of any of Clauses 34-45, wherein the instructions, when executed, cause the computing system to perform further operations comprising visually presenting the findings data via a display. Examples are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some can be different, to indicate more constituent signal paths, have a number label, to indicate a number of constituent signal paths, and/or have arrows at one or more ends, to indicate primary information flow direction. This, however, should not be construed in a limiting manner. Rather, such added detail can be used in connection with one or more exemplary embodiments to facilitate easier understanding of a circuit. Any represented signal lines, whether or not having additional information, can actually comprise one or more signals that can travel in multiple directions and can be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the platform within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections, including logical connections via intermediate components (e.g., device A may be coupled to device C via device B). In addition, the terms "first", "second", etc. may be used herein only to facilitate discussion, and carry no particular temporal or chronological significance unless otherwise indicated.

As used in this application and in the claims, a list of items joined by the term "one or more of' may mean any combination of the listed terms. For example, the phrase "one or more of A, B or C" may mean A, B, C; A and B; A and C; B and C; or A, B and C. To the extent that terms "includes," "including," "has," "contains," and variants thereof are used herein, such terms are intended to be inclusive in a manner similar to the term "comprises" as an open transition word without precluding any additional or other elements.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

## Claims

1. An inspection system (200) comprising:
a sensor (230);
a processor (210); and
non-transitory memory (220) coupled to the processor (210), the memory (220) comprising instructions which, when executed by the processor (210), cause the system (200) to perform operations comprising:
receiving image data from the sensor (230), the sensor (230) operable to scan an object (110) to generate the image data, wherein the object (110) is a manufactured object;
generating a three-dimensional "3D" image record for the object (110) based on the image data;
comparing the 3D image record with one or more of a stored design model for the object (110) or a stored baseline image record of the object (110); and
generating findings data based on the comparing, wherein the findings data is indicative of a discrepancy identified between the 3D image record and the one or more of the stored design model for the object (110) or the stored baseline image record of the object (110).

2. The inspection system (200) of claim 1, wherein the sensor (230) is mounted on a moving platform, the moving platform operable to move the sensor (230) relative to the object (110) to scan the object (110).

3. The inspection system (200) of claim 2, wherein the instructions, when executed, cause the system (200) to perform further operations comprising:
generating a motion plan for moving the sensor (230) relative to the object (110), wherein the motion plan is based on a type of the moving platform and a size of the object (110).

4. The inspection system (200) of claim 2 or claim 3, wherein the moving platform comprises one of a robotic arm, a track mounted assembly or a drone (120).

5. The inspection system (200) of claim 3, or claim 4 when dependent on 3, wherein the instructions, when executed, cause the system (200) to perform further operations comprising:
using simultaneous location and mapping to control the moving platform based on the motion plan.

6. The inspection system (200) of any preceding claim, wherein the image data comprises one or more of visual data, infrared data, ultrasonic data, light detection and ranging "LIDAR" data, or x-ray data, and wherein generating the 3D image record for the object comprises generating a 3D volumetric data set for the object.

7. The inspection system of any preceding claim, further comprising a display (260) to visually present the findings data.

8. An inspection method comprising:
receiving image data from a sensor (230), the sensor (230) scanning an object (110) to generate the image data, wherein the object (110) is a manufactured object;
generating a three-dimensional (3D) image record for the object (110) based on the image data;
comparing the 3D image record one or more of a stored design model for the object (110) or a stored baseline image record of the object (110); and
generating findings data based on the comparing, wherein the findings data is indicative of a discrepancy identified between the 3D image record and the one or more of the stored design model for the object (110) or the stored baseline image record of the object (110).

9. The inspection method of claim 8, wherein the sensor (230) is mounted on a moving platform and moved relative to the object (110) to scan the object (110).

10. The inspection method of claim 9, further comprising generating a motion plan for moving the sensor (230) relative to the object (110), wherein the motion plan is based on a type of the moving platform and a size of the object (110).

11. The inspection method of claim 9 or claim 10, wherein the moving platform comprises one of a robotic arm, a track mounted assembly or a drone (120).

12. The inspection method of claim 10, or claim 11 when dependent upon claim 10, further comprising using simultaneous location and mapping "SLAM" to control moving the sensor (230) based on the motion plan.

13. The automated inspection method according to any of claims 8-12, wherein the image data comprises one or more of visual data, infrared data, ultrasonic data, light detection and ranging "LIDAR" data, or x-ray data, and wherein generating the 3D image record for the object comprises generating a 3D volumetric data set for the object.

14. The inspection method according to any of claims 8-13, further comprising visually presenting the findings data via a display (260).

15. A non-transitory computer-readable storage medium comprising instructions which, when executed by a processor (210), cause a computing system (200) to perform the method according to any of claims 8 to 14.
